# EUROPEAN PATENT APPLICATION

(11) **EP 1 455 531 A2**
(43) Date of publication of application: **08.09.2004**
(21) Application number: 04004997.5
(22) Date of filing: 03.03.2004
(51) Int. Cl.: H04N 7/173

(54) **Information apparatus and resource control method**

(30) Priority: 05.03.2003 JP 2003058864
(71) Applicant: Kabushiki Kaisha Toshiba, Minato-ku, Tokyo 105 (JP)
(72) Inventor:
(74) Representative: Henkel, Feiler & Hänzel

(57) **Abstract**

A wireless AV station (101) includes a resource, a monitoring unit (32) which monitors whether a first device (1 or 2) issued a request to use the resource, and an arbitration processing unit (32) which determines, when the request to use the resource is issued, whether to accept the request, by referring to information which defines a second device to be rejected or permitted to use the resource in each time period.

## Description

The present invention relates to an information apparatus and resource control method capable of controlling devices used in the home or the like.

Recording/reproducing apparatuses which record/reproduce broadcast program data of the TV or the like are popularly used in the home and the like. Recently, information apparatuses which include the recording/reproducing function and incorporate a tuner for executing a reception process of broadcast program data of the TV or the like, an encode process, and a decode process are becoming available.

A tuner incorporated in such information apparatus can be regarded as a resource, the use of which is requested by various devices such as a remote controller accessory to the information apparatus and a computer on a network (LAN or the like) connected to the information apparatus.

Various devices can use a resource in various system configurations. For example, Jpn. Pat. Appln. KOKAI Publication No. 2002-100111 discloses a system in which five reproducing apparatuses and five recording apparatuses (resources) are arranged and the connection paths between the reproducing apparatuses and the recording apparatuses can be selected by a reproducing/recording selection apparatus having a plurality of selectors.

In the system configuration disclosed in this reference, five resources are arranged for five reproducing apparatuses which request to use resources. This results in high cost and a large space for installing the resources.

Embodiments of the present invention may provide an information apparatus and resource control method, which enable a plurality of devices to effectively use a resource.

According to one aspect of the present invention, there is provided an information apparatus, comprising a resource; a monitoring unit which monitors whether a first device issued a request to use the resource; and an arbitration processing unit which determines, when the request to use the resource is issued, whether to accept the request, by referring to information which defines a second device to be rejected or permitted to use the resource in each time period.

According to another aspect of the present invention, there is provided a resource control method applied to an information apparatus having a resource, the method comprising monitoring whether a first device issued a request to use the resource; and determining, when the request to use the resource is issued, whether to accept the request, by referring to information which defines a second device to be rejected or permitted to use the resource in each time period.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a diagram showing the arrangement of a home network system using an information processing apparatus according to an embodiment of the present invention;
FIG. 2 is a block diagram showing the arrangement of a wireless AV station;
FIG. 3 is a block diagram showing the arrangement of each information processing apparatus serving as a client;
FIG. 4 is a block diagram showing the first arrangement which realizes resource control by the wireless AV station;
FIG. 5 is a block diagram showing the second arrangement which realizes resource control by the wireless AV station;
FIG. 6 is a block diagram showing the functional arrangement of a resource control unit;
FIG. 7 is a view showing an example of information described in an arbitration management time table referred to by the resource control unit;
FIG. 8 is a view showing an example of information described in a programming time table referred to by the resource control unit;
FIG. 9 is a view showing an example of a user authentication window;
FIGS. 10A to 10C are views showing examples of a window when a request to use a resource is rejected;
FIGS. 11A to 11D are views showing a plurality of connection forms which may occur in resource control in the arrangement of FIG. 4;
FIGS. 12A to 12D are views showing a plurality of connection forms which may occur in resource control in the arrangement of FIG. 5;
FIG. 13 is a flow chart showing the first control operation by the resource control unit of the wireless AV station; and
FIG. 14 is a flow chart showing the second control operation by the resource control unit of the wireless AV station.

Embodiments of the present invention will be described below with reference to the drawings.

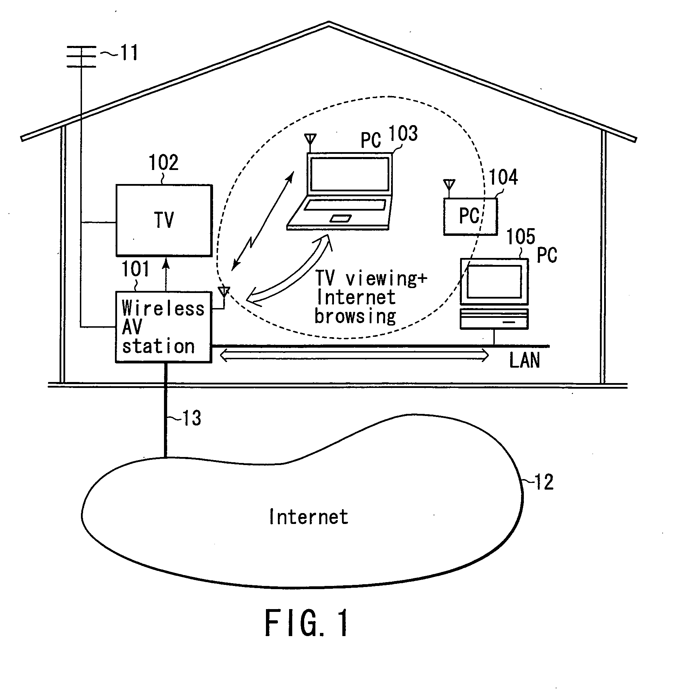

FIG. 1 shows the arrangement of a home network system using an information processing apparatus according to an embodiment of the present invention.

This home network system includes a wireless AV (audio/video) station 101, TV receiver 102, notebook personal computers 103 and 104, desktop personal computer 105, and the like.

The wireless AV station 101 serves as a home network server. This wireless AV station 101 provides services associated with viewing of broadcast program data of the TV or the like, Internet browsing, and the like to information processing apparatuses such as the personal computers 103 to 105 and the like via a wireless or wired network in the house.

The wireless AV station 101 is connected to an external global network (external network) such as the Internet 12 or the like via a communication line 13 such as an ISDN (Integrated Services Digital Network), ADSL (Asymmetric Digital Subscriber Line), CATV (Cable TV), or the like. Furthermore, the wireless AV station 101 is connected to various information processing apparatuses in the home via a wired or wireless network which forms the home network.

Each of the personal computers 103 to 105 serves as a client of the wireless AV station 101. The notebook personal computers 103 and 104 have wireless communication devices, and can establish wireless connection to the wireless AV station 101. The desktop personal computer 105 is connected to the wireless AV station 101 via a wired LAN.

The wireless AV station 101 connects the personal computers 103 to 105 to the Internet 12 to exchange data between Web sites on the Internet 12 and the personal computers 103 to 105.

An antenna cable connected to an outdoor TV broadcast reception antenna 11 is led indoors. The TV receiver 102 and wireless AV station 101 are connected to that antenna cable. Broadcast program data transmitted from a broadcasting station can be received and reproduced by the TV receiver 102, and can also be received by the wireless AV station 101. The wireless AV station 101 wirelessly transmits the received broadcast program data to the notebook personal computers 103 and 104 via a wireless LAN. Or the wireless AV station 101 transmits the received broadcast program data to the desktop personal computer 105 via the wired LAN.

The wireless AV station 101 provides the following principal functions:

### (1) Wireless router function

A wireless router function is a function of wirelessly connecting each information processing apparatus which can communicate with the wireless AV station 101 via the wireless LAN to the Internet 12, and exchanging data between Web sites on the Internet 12 and that information processing apparatus. The user can wirelessly browse the Internet anywhere in the home using the notebook personal computer 103 or 104, which can be connected to the wireless AV station 101 via the wireless LAN.

### (2) TV function

A TV function is a function of transmitting broadcast program data received by the wireless AV station 101 to each information processing apparatus connected to the wireless AV station 101 via the wireless or wired LAN. The user can view broadcast program data (live video), which is now on the air, anywhere in the home using the notebook personal computer 103 or 104.

### (3) TV video recording function

The wireless AV station 101 incorporates a magnetic disk drive device (hard disk drive; HDD) as a large-capacity storage device for recording broadcast program data. The wireless AV station 101 can wirelessly transmit broadcast program data, which is now on the air, to the information processing apparatuses, while recording that broadcast program data on the magnetic disk drive device as a file. Also, the wireless AV station 101 can wirelessly transmit broadcast program data which has already been recorded on the magnetic disk drive device to the information processing apparatuses, while recording another broadcast program data, which is now on the air, on the magnetic disk drive device. Furthermore, the wireless AV station 101 can output broadcast program data recorded on the magnetic disk drive device to the TV receiver 102.

### (4) Contents server function

The wireless AV station 101 can transmit various contents such as broadcast program data and the like, which are recorded as files on the magnetic disk drive device, to the information processing apparatus as a request source in response to a data acquisition request from that information processing apparatus.

### (5) Remote control function

The TV function, TV video recording function, and the like of the wireless AV station 101 can be remote-controlled by each of the personal computers 103 to 105. Also, the TV function, TV video recording function, and the like of the wireless AV station 101 can be controlled using a dedicated remote controller unit used to operate the wireless AV station 101. Furthermore, the wireless AV station 101 can be remote-controlled by a portable phone, personal computer, or the like via the Internet.

### (6) Resource control function

The wireless AV station 101 monitors whether respective devices (personal computes 103 to 105, a remote controller unit 200, and the like) have issued requests (broadcast program data transmission request, recording request, channel switching request, and the like) to use a resource (e.g., TV tuner). The wireless AV station 101 can arbitrate the right to use the resource between the devices as request sources. If broadcast program data programmed in advance exists, arbitration is so executed as not to inhibit recoding processing in the programmed time period.

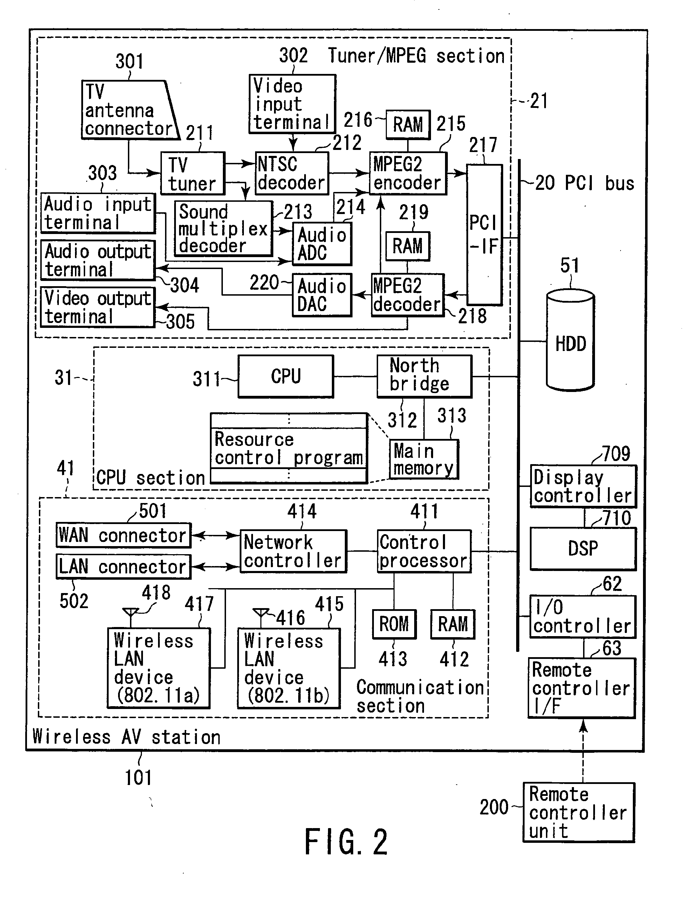

The arrangement of the wireless AV station 101 will be described below with reference to FIG. 2.

As shown in FIG. 2, the wireless AV station 101 roughly includes three major components, i.e., a tuner/MPEG section 21, CPU section 31, and communication section 41.

These tuner/MPEG section 21, CPU section 31, and communication section 41 are respectively connected to a bus 20 such as a PCI bus or the like. Also, a magnetic disk drive device (hard disk drive; HDD) 51 is connected to the bus 20.

The tuner/MPEG section 21 executes a reception process (including a channel selection process) of broadcast program data, an encode process for compression-encoding the received broadcast program data, a decode process for decoding the compression-encoded TV broadcast program data, and the like. As shown in FIG. 2, the tuner/MPEG section 21 includes a TV tuner 211, NTSC (National TV Standards Committee) decoder 212, sound multiplex decoder 213, audio A/D converter (audio ADC) 214, MPEG2 encoder 215, RAM 216, PCI bus interface (PCI-IF) 217, MPEG2 decoder 218, RAM 219, audio D/A converter (audio DAC) 220, and the like.

The TV tuner 211 is connected to a TV antenna cable via a TV antenna connector 301. The TV tuner 211 is a device for receiving broadcast program data of a channel, which is designated by a viewing request from the personal computers 103 to 105 or remote controller unit 200. The TV tuner 211 receives a TV broadcast signal and selects a channel on the basis of the viewing request. TV broadcast program data of a given channel, which is received by the TV tuner 211, is sent to the NTSC decoder 212, which separates the input TV broadcast program data into a video signal (moving picture) and audio signal. Furthermore, the separated signals undergo a conversion process into digital data as needed.

The NTSC decoder 212 is also connected to a video input terminal 302, and can receive video signals from external video devices such as a DVD (Digital Versatile Disc) player, VCR (Video Cassette Recorder), and the like. A sound multiplex signal superposed on the TV broadcast program data is decoded by the sound multiplex decoder 213, and is sent to the audio A/D converter (audio ADC) 214, which converts the input signal into digital data. The audio A/D converter (audio ADC) 214 is also connected to an audio input terminal 303, and can receive audio signals from external video/audio devices.

The MPEG2 encoder 215 executes an encode process for compression-encoding the input video and audio data. This encode process is executed according to the MPEG2 standards. The RAM 216 is used as a work memory of the encode process executed by the MPEG2 encoder 215. The broadcast program data, which is received by the TV tuner 211, is encoded by the MPEG2 encoder 215 to be converted into an MPEG2 stream.

The PCI bus interface (PCI-IF) 217 connects the tuner/MPEG section 21 to the bus 20, and allows the tuner/MPEG section 21 to communicate with the CPU section 31 and HDD 51 via the bus 20. The PCI bus interface (PCI-IF) 217 incorporates registers which can be accessed by the CPU section 31. The operations of the TV tuner 211 and MPEG2 encoder 215 are controlled in accordance with commands, which are set in the registers of the PCI bus interface (PCI-IF) 217 by the CPU section 31.

The MPEG2 decoder 218 decodes the broadcast program data encoded in the MPEG2 format. For example, when encoded broadcast program data recorded on the HDD 51 is to be reproduced by the TV receiver 102, encoded TV broadcast program data, which is read out from the HDD 51, is sent to and decoded (decompressed) by the MPEG2 decoder 218 via the PCI bus interface 217. The RAM 219 is used as a work memory of the decode process executed by the MPEG2 decoder 218. The operation of the MPEG2 decoder 218 is also controlled by commands, which are set in the registers of the PCI bus interface (PCI-IF) 217 by the CPU section 31.

Video data decoded by the MPEG2 decoder 218 is sent to the TV receiver 102 or the like via a video output terminal 305. Audio data decoded by the MPEG2 decoder 218 is converted into an analog signal by the audio D/A converter (audio DAC) 220, as needed, and output from an audio output terminal 304 to an external audio/video device.

Furthermore, in this embodiment, broadcast program data decoded by the MPEG2 decoder 218 can be input to the MPEG2 encoder 215 again, and can undergo an encode process. This process is used to execute a down-convert process for converting the transmission rate (bit rate) of encoded broadcast program data which is recorded on the HDD 51 into a specific transmission rate corresponding to the frequency band of, e.g., the wireless LAN or the like.

More specifically, the transmission rate (bit rate) of encoded broadcast program data (MPEG2 stream) obtained by the encode process of the MPEG2 encoder 215 varies depending on the image quality (low image quality, standard image quality, high image quality) of broadcast program data to be recorded on the HDD 51. When high image quality is selected, the MPEG2 stream of broadcast program data having a very high transmission rate is recorded on the HDD 51. In this case, the MPEG2 stream of that broadcast program data cannot often be transmitted in real time in the frequency band of a wireless communication. In such case, a down-convert process for down-converting the transmission rate of the MPEG2 stream of broadcast program data to be wirelessly transmitted to a specific transmission rate for wireless transmission is executed.

The CPU section 31 controls the TV tuner 211, MPEG2 encoder 215, and MPEG2 decoder 218 in the tuner/MPEG section 21, and also controls data read/write accesses from/to the HDD 51. The CPU section 31 receives commands associated with TV viewing transmitted from the personal computers 103 to 105 and transmits an MPEG2 stream of broadcast program data to be transmitted to the personal computers 103 to 105 to the communication section 41 via communications with the communication section 41. The CPU section 31 includes a CPU 311, a north bridge 312 which connects a CPU bus of the CPU 311 and the PCI bus 20, and a main memory 313. For example, a mail control program resides on the main memory 313. The CPU section 31 implements the aforementioned resource control function by executing this resource control program.

The communication section 41 is a communication controller which can serve as a wireless LAN router by itself. The communication section 41 can establish wireless connection to the personal computers 103 and 104, and is also connected to the personal computer 105 via the wired LAN. The communication section 41 connects the personal computers 103 to 105 to the Internet 12 in response to requests transmitted from the personal computers 103 to 105, and exchanges data between the personal computers 103 to 105 and the Internet 12. In this case, all data exchange processes between the personal computers 103 to 105 and the Internet 12 are done within the communication section 41, and the CPU section 31 is not used.

As shown in FIG. 2, the communication section 41 includes a control processor 411, RAM 412, ROM 413, network controller 414, two wireless LAN devices 415 and 417, WAN connector 501, LAN connector 502, and the like.

The WAN (Wide Area Network) connector 501 is a broadband terminal used to exchange data with the Internet 12. The connector 501 is connected to the communication line 13 via a modem or the like. The LAN connector 502 is connected to the wired LAN in the home.

The network controller 414 is a network control device which controls exchange of data with the Internet 12 via the WAN connector 501, and exchange of data with the home wired LAN via the LAN connector 502. The wireless LAN devices 415 and 417 are wireless communication devices which respectively exchange data with the personal computers 103 and 104 via the wireless LAN. The devices 415 and 417 wirelessly communicate with the personal computers 103 and 104 via corresponding antennas 416 and 418. The wireless LAN device 415 is configured to execute wireless communications complying with IEEE 802.11b. The wireless LAN device 417 is configured to execute wireless communications complying with IEEE 802.11a. Since the two wireless LAN devices 415 and 417 are equipped, wireless communications can be made using either IEEE 802.11b or IEEE 802.11a. The wireless LAN device used in a wireless communication is seamlessly switched in correspondence with the wireless communication standard supported by a client, which is wirelessly connected to the wireless AV station 101.

The control processor 411 controls the network controller 414 and wireless LAN devices 415 and 417 to control data exchange between the personal computers 103 to 105 and the Internet 12. More specifically, the control processor 411 includes an IP masquerade function, NAT (Network Address Translation) function, DHCP (Dynamic Host Configuration Protocol) function, and the like as those which are required to operate the communication section 41 as a wireless router. Furthermore, the control processor 411 is connected to the PCI bus 20, and has a function of notifying the CPU 311 of requests (commands) or the like associated with TV viewing, which are received from the personal computers 103 and 104 via the wireless LAN device 415 or 417, and notifying the CPU 311 of requests (commands) or the like associated with TV viewing, which are received from the personal computer 105 on the wired LAN via the network controller 414.

Moreover, the control processor 411 has a function of transmitting, upon receiving broadcast program data transferred from the CPU 311 via the PCI bus 20, that broadcast program data to a personal computer as a request source via the wireless LAN device 415 or 417 or network controller 414. In this case, the transmission process of the broadcast program data to the personal computer as the request source is executed parallel to data exchange between that personal computer and the Internet 12.

For example, when the personal computer 103 which can be wirelessly connected to the communication section 41 is wirelessly browsing the Internet, and broadcast program data requested by that personal computer 103 is to be wirelessly transmitted to the personal computer 103, the control processor 411 controls the wireless LAN device 415 or 417 so that Web contents data received from a Web server on the Internet 12 and the broadcast program data encoded by the tuner/MPEG section 21 are time-divisionally transmitted to the personal computer 103 via wireless communications. More specifically, the control processor 411 executes a process for multiplexing the Web contents data and encoded broadcast program data, and time-divisionally transmits the multiplexed Web contents data and broadcast program data to the personal computer 103 via wireless communications. In this way, by sending the Web contents data and broadcast program data as independent data to the personal computer 103, the personal computer 103 can simultaneously display these Web contents data and broadcast program data using corresponding application programs. Also, the display positions and display sizes of windows used to display the Web contents data and broadcast program data can be freely changed by the corresponding application programs.

The aforementioned functions of the control processor 411 are implemented by firmware stored in the ROM 413.

Furthermore, the wireless AV station 101 has a display controller 709, display panel (DSP) 710, I/O controller 62, remote controller interface 63, and the like.

The display controller 709 displays various kinds of information on the screen of the display panel 710 in accordance with an instruction from the CPU 311. The display panel 710 is controlled by the display controller 709, and displays and outputs information.

The I/O controller 62 and remote controller interface 63 are used to receive remote controller codes which are transmitted from the remote controller unit 200 via infrared ray signals or the like. The received remote controller codes are sent to the CPU section 31 via the bus 20.

The HDD 51 is used to record various contents such as broadcast program data, still picture data, audio data, and the like. The CPU 311 manages contents recorded on the HDD 51 as a contents database. The contents database stores additional information such as a program title name, channel number, song name, genre, artist name, and the like for each contents data recorded on the HDD 51. The CPU 311 provides the contents of the contents database onto the screen of the TV receiver 102 or to each information processing apparatus as a contents list menu in response to a command sent from the information processing apparatus or remote controller unit 200. The user can select desired contents data with reference to the contents list menu.

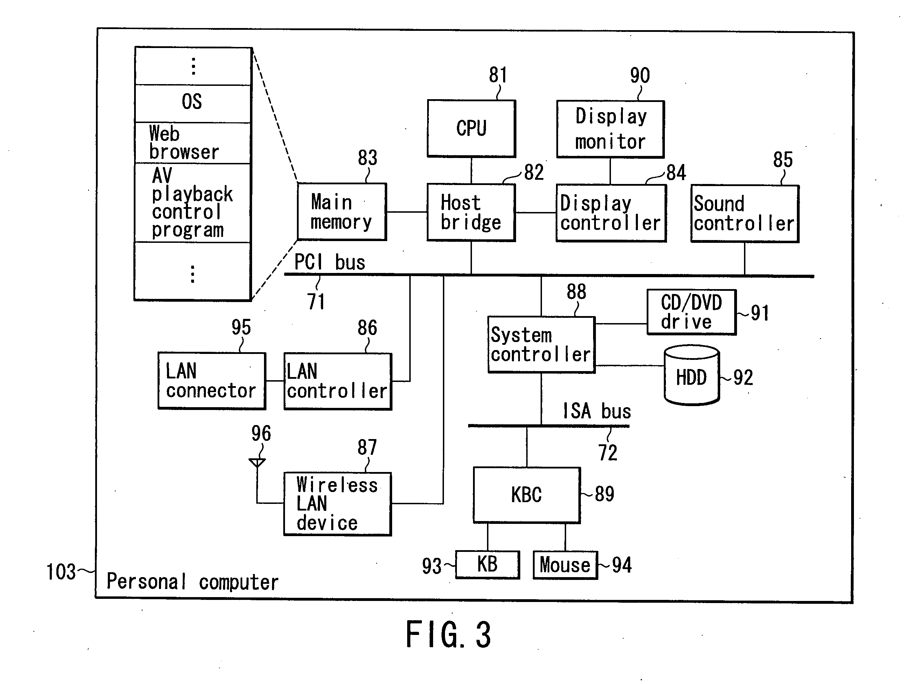

The arrangement of each information processing apparatus serving as a client will be described below with reference to FIG. 3. In this case, the notebook personal computer 103 will be exemplified below.

As shown in FIG. 3, the personal computer 103 includes a PCI bus 71, ISA bus 72, CPU 81, host bridge 82, main memory 83, display controller 84, sound controller 85, LAN controller 86, wireless LAN device 87, system controller 88, keyboard controller (KBC) 89, display monitor 90, CD/DVD drive 91, HDD 92, keyboard (KB) 93, mouse 94, LAN connector 95, and the like.

The CPU 81 is a processor for controlling the operation of the personal computer 103, and executes various programs such as an operating system (OS), Web browser, AV playback control program, and the like loaded onto the main memory 83. The AV playback control program is an application program used to play back audio/video data (AV data). The AV playback control program has a function of remote-controlling the wireless AV station 101, a function of playing back AV data such as TV broadcast program data, music data, and the like transmitted from the wireless AV station 101, and a function of downloading AV data such as TV broadcast program data, music data, and the like from the wireless AV station 101 as files. Also, the AV playback control program can play back AV data recorded on a recording medium such as a CD/DVD, which is reproduced by the CD/DVD drive 91.

The display controller 84 is a device for controlling the display monitor 90 of the personal computer 103. The sound controller 85 is used as a sound source that outputs sounds corresponding to audio data.

The LAN controller 86 is a device for executing a communication with the wireless AV station 101 via the wired LAN. When the LAN connector 95 is connected to the wired LAN, the CPU 81 executes a communication with the wireless AV station 101 via the LAN controller 86.

The wireless LAN device 87 is a wireless communication device which exchanges data with the wireless AV station 101 via the wireless LAN. The wireless LAN device 87 wirelessly communicates with the wireless AV station 101 via an antenna 96. The wireless LAN device 87 is configured to make a wireless communication complying with IEEE 802.11b or IEEE 802.11a.

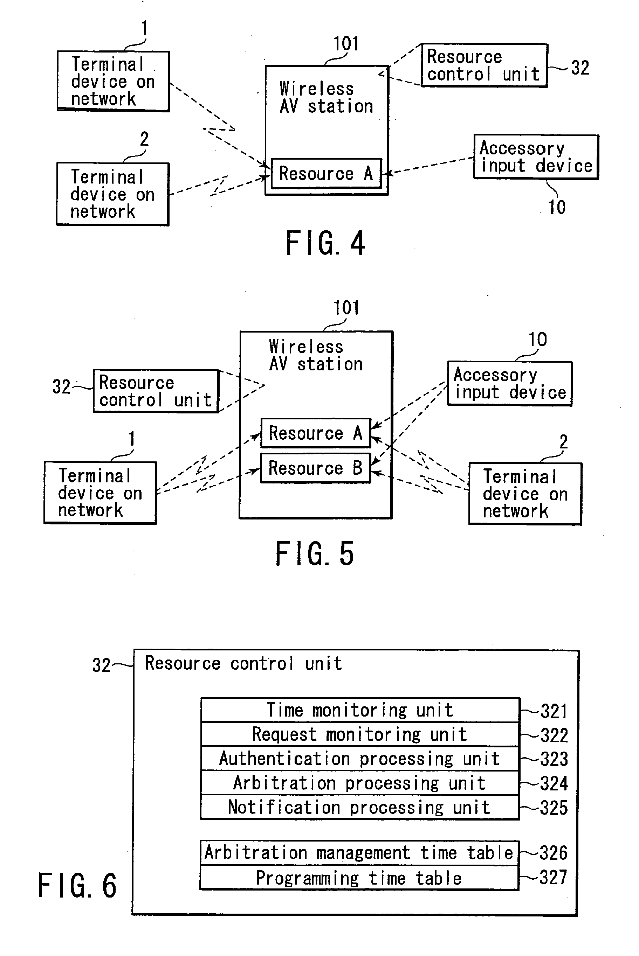

FIG. 4 shows the first arrangement (the number of target resources is one) which realizes resource control by the wireless AV station 101.

The wireless AV station 101 has resource A corresponding to the TV tuner 211 in FIG. 2. Devices which can request the use of resource A are a plurality of terminal devices 1, 2,... present on a network connected to the wireless AV station 101. The terminal devices 1, 2,... correspond to the personal computers 103, 104,... in FIG. 1. Also, a device which can request the use of resource A is an input device 10 accessory to the wireless AV station 101. The input device 10 corresponds to the remote controller unit 200 in FIG. 2.

The wireless AV station 101 includes a resource control unit 32. The resource control unit 32 corresponds to the resource control program in the aforementioned main memory (FIG. 2). As shown in FIG. 6, the resource control unit 32 includes various functions such as a time monitoring unit 321, request monitoring unit 322, authentication processing unit 323, arbitration processing unit 324, notification processing unit 325, and the like, and various tables such as an arbitration management time table 326, programming time table 327, and the like.

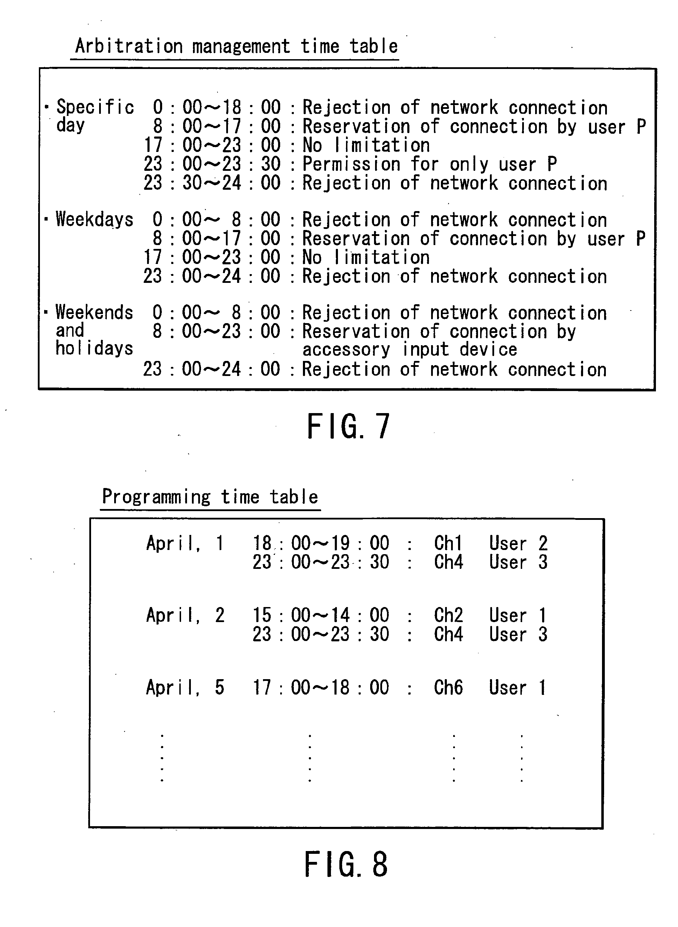

The arbitration management time table 326 describes information which defines a device or user that is rejected or permitted to use a resource in each time period (see FIG. 7). This will be described later.

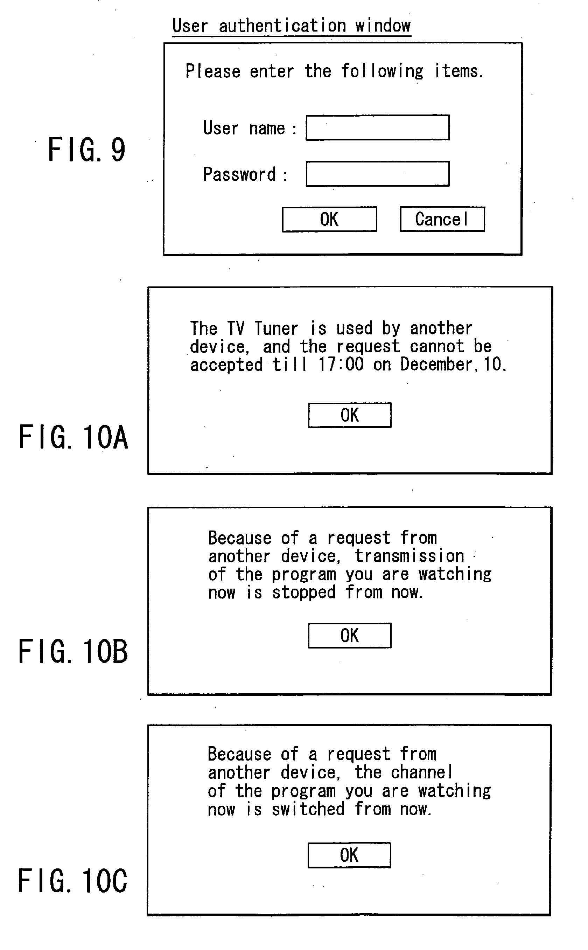

The programming time table 327 describes contents (time and date, time period, channel, user ID, and the like) programmed by each user (see FIG. 8).

The time monitoring unit 321 monitors whether the current time is the switching time of the time period in the arbitration management time table 326. If so, the time monitoring unit 321 passes control to the arbitration processing unit 324.

The request monitoring unit 322 monitors whether a resource use request (broadcast program data transmission request, recording request, channel switching request, and the like) has been issued, and if so, passes control to the arbitration processing unit 324.

In the presence of a request to use a resource, the authentication processing unit 323 authenticates whether the user who has issued the request is authentic. In this case, the authentication processing unit 323 causes the display of a corresponding device to display a user authentication window as shown in FIG. 9, and prompts the user to input a user name, password, and the like. Also, the authentication processing unit 323 performs the same authentication process for a user who requests rewrite of information in the arbitration management time table 326.

When the request monitoring unit 322 detects a resource use request, and when the time monitoring unit 321 detects that the current time is the switching time of the time period in the arbitration management time table 326, the arbitration processing unit 324 executes arbitration associated with the right to use a resource.

For example, when a resource use request is detected, the arbitration processing unit 324 determines whether to accept the request, by referring to the arbitration management time table 326 and programming time table 327 and comparing the requested time period, the device ID or user ID, and the like. If the requested use time period corresponds to a recording time period, the arbitration processing unit 324 determines to reject the request. In this case, the arbitration processing unit 324 desirably notifies the device as a request source via the notification processing unit 325 (to be described later) of a message that the request cannot be accepted. If transmission (viewing) of broadcast program data in the same channel as a selected channel during recording is requested, the request may be permitted.

When the current time is the switching time of the time period in the arbitration management time table 326, the arbitration processing unit 324 refers to the arbitration management time table 326, and determines whether to release the resource from a device which uses it now. If transmission of broadcast program data to the current device is canceled by releasing the resource, the arbitration processing unit 324 desirably notifies (displays) the viewing device via the notification processing unit 325 (to be described later) of a message that transmission to the viewing device is to be canceled. If no device issues a resource use request, the resource may be released upon receiving a resource use request from another device, instead of immediately releasing the resource from the device which uses it now. In releasing the resource from a device which is receiving (viewing) broadcast program data, the resource may be simply switched to a channel selected by a device which is to use the resource next, without canceling transmission of the broadcast program data to the current device. In this case, the arbitration processing unit 324 desirably notifies (displays) the viewing device via the notification processing unit 325 (to be described later) of a message that the channel is to be switched.

When 1) a resource use request is rejected as a result of arbitration by the arbitration processing unit 324, 2) transmission to a viewing device is canceled, or 3) the channel of broadcast program data transmitted to a viewing device is switched, the notification processing unit 325 sends a prepared message to this effect to a corresponding device, and displays the message on the screen of the device. Display examples of the three cases are shown in FIGS. 10A to 10C.

If the notification target device is any one of the personal computers 103 to 105, the notification processing unit 325 transmits a message to that personal computer via the CPU 31, PCI bus 20, and communication section 41 in FIG. 2. The personal computer displays the received message on the screen.

If the target device is the remote controller unit 200, the notification processing unit 325 displays and outputs an image representing a message to the TV receiver 102 from the video output terminal 305 via the CPU 31, PCI bus 20, PCI bus interface 217, and MPEG2 decoder 218 in FIG. 2. Information input to the remote controller unit 200 by an operation is also displayed and output to the TV receiver 102 via the same path.

FIG. 5 shows the second arrangement (modification using two target resources) which realizes resource control by the wireless AV station 101.

The wireless AV station 101 further has resource B corresponding to a tuner in addition to resource A. Devices which can request the use of resources A and B are the terminal devices 1, 2,... and input device 10, similar to FIG. 4.

In the arrangement of FIG. 5, control of the resource control unit 32 over resource A is switching control corresponding to the time period, similar to FIG. 4.

As for resource B, switching control corresponding to the time period may be performed, similar to resource A. A use request from a device which has issued the first access request to resource B may be accepted without particular limitations on devices which request use.

FIG. 7 is a view showing an example of information described in the arbitration management time table 326 referred to by the resource control unit 32.

If programmed broadcast program data exists, the resource control unit 32 controls to use a resource for a recording process with the highest priority in the programmed time period regardless of the contents of the arbitration management time table 326.

The arbitration management time table basically defines a device or user to be switched every time period in a day. In this case, switching control may be controlled such that the same switching control is performed everyday, different switching control operations are performed in days of the week, or switching control is changed between weekdays, and weekends and holidays.

In the arbitration management time table of FIG. 7, a device whose use request is rejected or accepted is defined for each time period. If a plurality of devices whose use requests are not particularly rejected exist, a use request from a device which has issued the first use request out of these devices is accepted.

For example, the arbitration management time table defines the following conditions.
i) In a given time period, a use request from a device or user that has issued the first use request is accepted (no limitation).
ii) In a given time period, a use request from a terminal device connected to a network to a resource (only resource A or both resources A and B) is rejected (connection is rejected).
iii) In a given time period, a use request from an accessory input device to a resource (only resource A or both resources A and B) is rejected (connection is rejected).
iv) In a given time period, only a use request from a specific user or specific device (accessory input device or a terminal device connected to a network) is accepted for a given resource (e.g., only resource A). When a use request from a specific user is to be accepted, user authentication is desirably performed.
v) In a given time period, a use request from a specific device or specific user to resource A is accepted (connection is reserved). As for a use request to resource B, a use request from a device or user that has issued the first use request is accepted.

A user who can rewrite information in the arbitration management time table is registered in advance. If the user requests rewrite of the arbitration management time table by using a device on a network or an input device in a given time period, user authentication is executed to confirm that the user is authentic, and then rewrite is permitted.

In addition, the first control of switching between rejection and acceptance of a use request to a resource in accordance with the time period and executing rejection or acceptance, and the second control of accepting a use request from a device or user that has issued the first use request may be selectively switched.

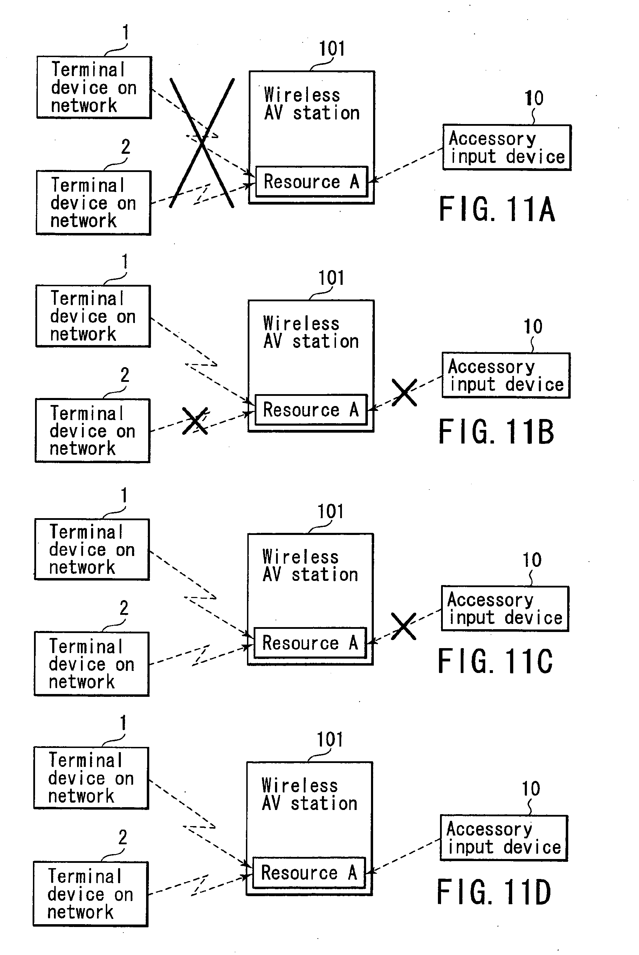

FIGS. 11A to 11D show a plurality of connection forms which may occur in resource control in the arrangement of FIG. 4.

FIG. 11A shows a form in which use requests to resource A from the terminal devices 1, 2,... connected to a network are rejected (connection is rejected) in a given time period. In this case, the accessory input device 10 can use resource A.

FIG. 11B shows a form in which only a use request to resource A from the specific terminal device 1 or a specific user is accepted in a given time period.

FIG. 11C shows a form in which a use request from the accessory input device 10 to resource A is rejected (connection is rejected) in a given time period. In this case, any one of the terminal devices 1, 2,... can use resource A.

FIG. 11D shows a form in which a use request from a device or user that has issued the first use request is accepted (no limitation).

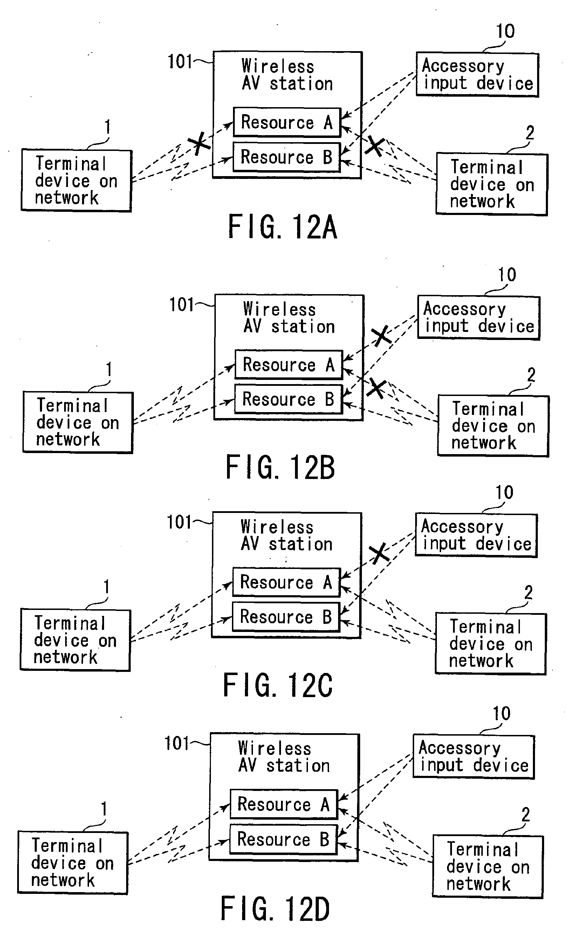

FIGS. 12A to 12D show a plurality of connection forms which may occur in resource control in the arrangement of FIG. 5.

FIG. 12A shows a form in which use requests to resource A from the terminal devices 1, 2,... connected to a network are rejected (connection is rejected) in a given time period. In this case, the accessory input device 10 can use resource A. As for resource B, a device or user that has issued the first use request can use resource B.

FIG. 12B shows a form in which only a use request to resource A from the specific terminal device 1 or a specific user is accepted in a given time period. As for resource B, a device or user that has issued the first use request can use resource B.

FIG. 12C shows a form in which a use request from the accessory input device 10 to resource A is rejected (connection is rejected) in a given time period. In this case, any one of the terminal devices 1, 2,... can use resource A. As for resource B, a device or user that has issued the first use request can use resource B.

FIG. 12D shows a form in which a use request from a device or user that has issued the first use request is accepted for both resources A and B (no limitation).

The resource control unit 32 executes both the first control operation corresponding to a resource use request and the second control operation corresponding to the switching time of the time period in the arbitration management time table 326.

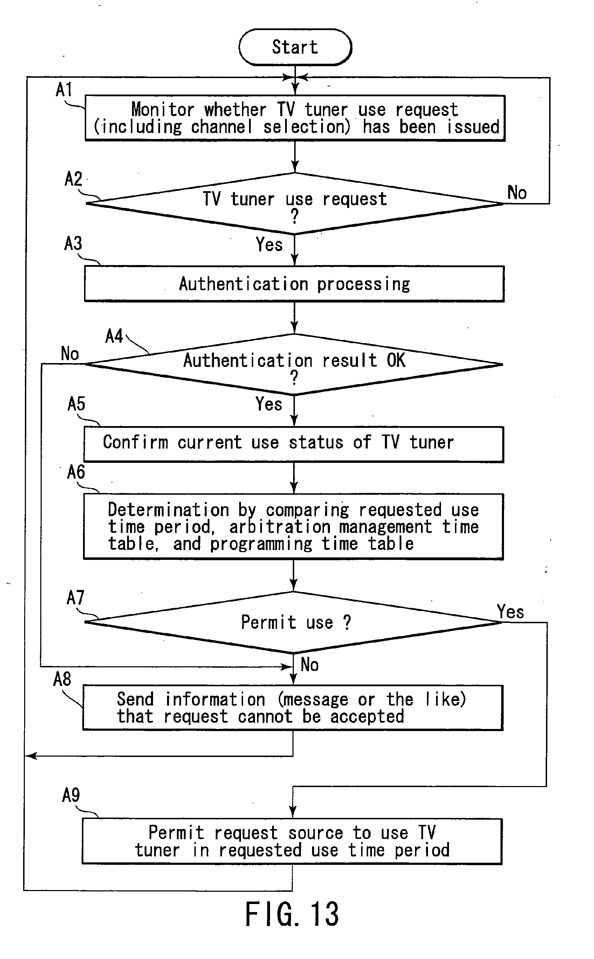

The first control operation by the resource control unit 32 of the wireless AV station 101 will be explained with reference to FIG. 13.

The resource control unit 32 monitors whether a use request (broadcast program data transmission request, recording request, channel switching request, or the like) to a TV tuner as a resource has been issued (step A1).

If no device has issued any TV tuner use request (No in step A2), the resource control unit 32 continues monitoring in step A1. If a given device has issued a TV tuner use request (Yes in step A2), the resource control unit 32 performs an authentication process for the device or user as a request source (step A3).

If it is confirmed as a result of authentication that the request source is unauthentic (No in step A4), the resource control unit 32 sends to the request source a message that the request cannot be accepted (step A8), and repeats the process from step A1. If it is confirmed as a result of authentication that the request source is authentic (Yes in step A4), the resource control unit 32 confirms the current use status of the TV tuner (e.g., whether the TV tuner is idle) (step A5). Further, the resource control unit 32 determines whether to accept the request, by referring to the arbitration management time table 326 and programming time table 327 and comparing the requested time period, the device ID or user ID, and the like (step A6).

If the requested use time period corresponds to a recording time period, or the arbitration management time table 326 designates that the device is one to be rejected, the resource control unit 32 determines that the device cannot be permitted to use the TV tuner (No in step A7). In this case, the resource control unit 32 sends to the request source a message that the request cannot be accepted (step A8), and repeats the process from step A1. If it is determined that the device can be permitted to use the TV tuner (Yes in step A7), the resource control unit 32 permits the request source to use the TV tuner in the requested time period (step A9), and repeats the process from step A1.

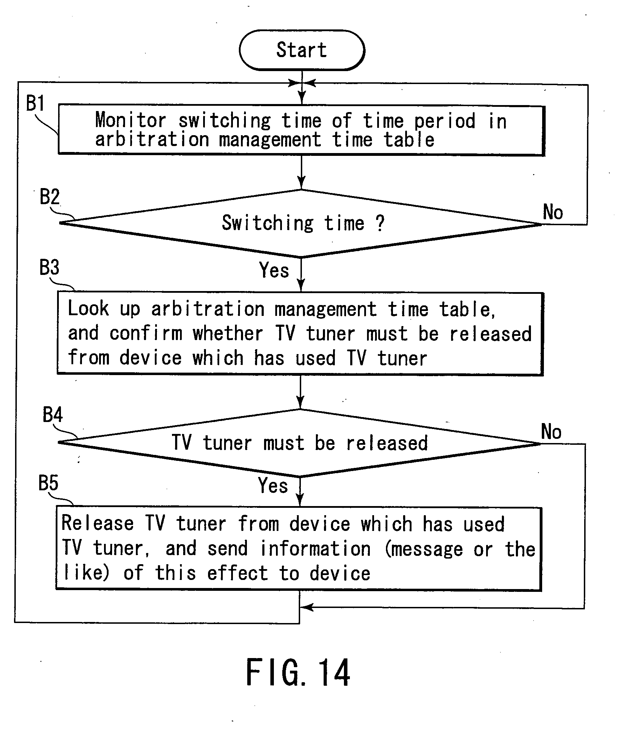

The second control operation by the resource control unit 32 of the wireless AV station 101 will be explained with reference to FIG. 14.

The resource control unit 32 monitors whether the current time is the switching time of the time period in the arbitration management time table 326 (step B1) .

The resource control unit 32 waits until the current time reaches the switching time of the time period (No in step B2). If the current time reaches the switching time of the time period (Yes in step B2), the resource control unit 32 refers to the arbitration management time table 326, and confirms whether to release the TV tuner from a device which uses it now (step B3).

If the resource control unit 32 determines that the TV tuner need not be released, because of no TV tuner use request from another device or the like (No in step B4), the resource control unit 32 does not release the TV tuner, and repeats the process from step B1.

If the arbitration management time table 326 designates that the device which uses the TV tuner now is the one to be rejected in the next time period, the resource control unit 32 determines that the TV tuner must be released (Yes in step B4). In this case, the resource control unit 32 releases the TV tuner from the device which uses it now, sends a message to this effect to the device (step B5), and repeats the process from step B1.

According to the embodiment, switching control corresponding to the time period enables efficiently processing an access request from each device or user, and individually controlling permission/rejection of an access.

In the presence of a plurality of resources, an access request from each device or user can be efficiently processed, and permission/rejection of an access can be individually controlled.

As has been described in detail above, according to the present invention, it is possible to enable a plurality of devices to effectively use a resource.

## Claims

1. An information apparatus, **characterized by** comprising:
a resource (A or B);
monitoring means (322) for monitoring whether a first device issued a request to use the resource; and
arbitration processing means (324, 326) for, when the request to use the resource is issued, determining whether to accept the request, by referring to information which defines a second device to be rejected or permitted to use the resource in each time period.

2. The apparatus according to claim 1, **characterized in that** the first device is identical to the second device.

3. The apparatus according to claim 1, **characterized in that** the first device is different from the second device.

4. The apparatus according to claim 1, **characterized in that** the resource (A, B) includes a tuner which performs a reception process of broadcast program data.

5. The apparatus according to claim 4, **characterized in that** the arbitration processing means (324, 326) determines whether to accept the request, by further referring to information representing a recording time period of the broadcast program data.

6. The apparatus according to claim 5, **characterized in that** when a requested use time period coincides with the recording time period, the arbitration processing means (324, 326) determines to reject the request.

7. The apparatus according to claim 1, **characterized by** further comprising means (325) for, when the request is determined not to be accepted, notifying a request source of a message that the request cannot be accepted.

8. The apparatus according to claim 1, **characterized by** further comprising authentication processing means (323) for, when the request to use the resource is issued, authenticating whether a user who issued the request is authentic.

9. A resource control method applied to an information apparatus having a resource, the method **characterized by** comprising:
monitoring whether a first device issued a request to use the resource (A1, A2); and
determining, when the request to use the resource is issued, whether to accept the request, by referring to information which defines a second device to be rejected or permitted to use the resource in each time period (A3 to A9) .

10. The method according to claim 9, **characterized in that** the first device is identical to the second device.

11. The method according to claim 9, **characterized in that** the first device is different from the second device.

12. The method according to claim 9, **characterized in that** the resource includes a tuner which performs a reception process of broadcast program data.

13. The method according to claim 12, **characterized in that** the determination (A3 to A9) includes determining whether to accept the request, by further referring to information representing a recording time period of the broadcast program data (A6).

14. The method according to claim 13, **characterized in that** the determination (A3 to A9) includes determining, when a requested use time period coincides with the recording time period, to reject the request (A6 to A8).

15. The method according to claim 9, **characterized in that** the determination (A3 to A9) includes notifying, when the request is determined not to be accepted, a request source of a message that the request cannot be accepted (A8).

16. The method according to claim 9, **characterized in that** the determination (A3 to A9) includes authenticating, when the request to use the resource is issued, whether a user who issued the request is authentic (A3, A4).
